# EUROPEAN PATENT SPECIFICATION

(11) **EP 3 588 307 B1**
(45) Date of publication and mention of the grant of the patent: **07.06.2023**
(21) Application number: 19176600.5
(22) Date of filing: 24.05.2019
(51) Int. Cl.: G06F 12/02, G06F 12/06, G06F 13/40, G06F 13/16

(54) **NON VOLATILE MEMORY MODULE FOR RACK IMPLEMENTATIONS**
NICHTFLÜCHTIGES SPEICHERMODUL FÜR RACK-IMPLEMENTIERUNGEN
MODULE DE MÉMOIRE NON VOLATILE POUR IMPLÉMENTATIONS DE CRÉMAILLÈRE

(30) Priority: 29.06.2018 US 201816023047
(43) Date of publication of application: 01.01.2020
(73) Proprietor: Intel Corporation, Santa Clara, CA 95054 (US)
(72) Inventor: NACHIMUTHU, Murugasamy K., Beaverton, OR 97007 (US); SCHMISSEUR, Mark A., Phoenix, AZ 85048 (US); ZIAKAS, Dimitrios, Hillsboro, OR 97124 (US); DAS SHARMA, Debendra, Saratoga, CA 95070 (US); KUMAR, Mohan J., Aloha, OR 97007 (US)
(74) Representative: Rummler, Felix

(56) References cited:
- US-A1- 2014 067 984
- US-A1- 2017 131 915
- US-B1- 9 648 102

## Description

### Field of Invention

The field of invention pertains generally to the computing sciences and more specifically to a non volatile memory module for rack implementations.

### Background

With the emergence of centralized computing such as cloud computing and other internet based high end computing implementations, new ways of implementing high performance computing systems are being investigated and pursued. The performance and/or efficiency of the computing racks used by high performance data centers are especially receiving more focused attention.

US2014/067984A1 relates to an integrated networked storage and switching apparatus comprising one or more flash memory controllers, a system controller, and a network switch integrated within a common chassis.

US2017/131915A1 relates to System on a Chip (SoC) devices including two packetized memory buses for conveying local memory packets and system interconnect packets. In an in-situ configuration of a data processing system two or more SoCs are coupled with one or more hybrid memory cubes (HMCs). The memory packets enable communication with local HMCs in a given SoC's memory domain. The system interconnect packets enable communication between SoCs and communication between memory domains. In a dedicated routing configuration each SoC in a system has its own memory domain to address local HMCs and a separate system interconnect domain to address HMC hubs, HMC memory devices, or other SoC devices connected in the system interconnect domain.

US9648102B1 relates to a method performed by a first server on a chip (SoC) node that is one instance of a plurality of nodes within a cluster of nodes. An operation is performed for determine if a second one of the SoC nodes in the cluster has data stored thereon corresponding to a data identifier in response to receiving a data retrieval request including the data identifier. An operation is performed for determining if a remote memory access channel exists between the SoC node and the second one of the SoC nodes. An operation is performed for access the data from the second one of the SoC nodes using the remote memory access channel after determine that the second one of the SoC nodes has the data stored thereon and that the remote memory access channel exists between the SoC node and the second one of the SoC nodes.

### Summary

The invention is defined in the claims.

### Figures

A better understanding of the present invention can be obtained from the following detailed description in conjunction with the following drawings, in which:
Fig. 1 shows a traditional computing rack architecture;
Fig. 2 shows an emerging computing rack architecture;
Fig. 3 shows an emerging computing rack architecture with an NVRAM module;
Figs. 4a, 4b and 4c depict operation of an NVRAM module;
Fig. 5 shows an embodiment of an NVRAM module;
Fig. 6 shows an emerging rack architecture with multiple NVRAM modules;
Fig. 7 shows a computing system.

### Detailed Description

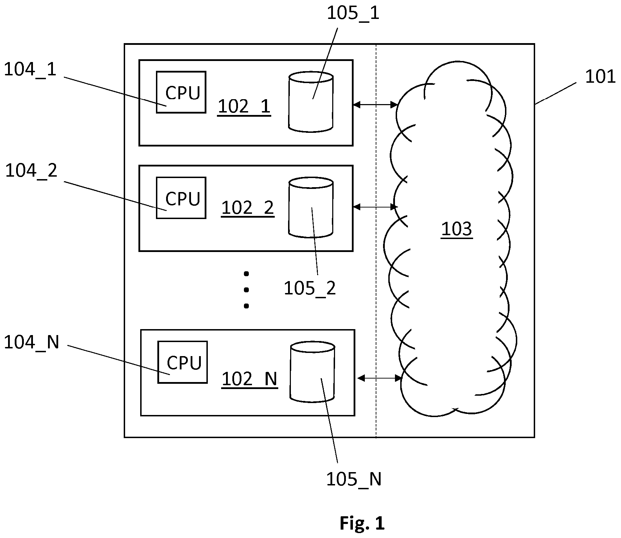

A modern day high performance computing infrastructure, such as the data center of a large corporation or government organization, typically installs computing resources in "racks" where each rack consists of multiple server computers. Here, referring to Fig. 1, the rack 101 is a cabinet like structure having some kind of mechanical fixturing (e.g., shelves, backplane chassis/frame screw holes, etc.) for mounting multiple server computers 103 within the rack 101. The different server computers 103 are communicatively coupled by a network 102 within the rack 101 (such as, e.g., an Ethernet or proprietary local area network (LAN)). The rack may also include a switching hub, not shown in Fig. 1, to implement the network 102. Multiple racks may be communicatively coupled to one another by way of gateways between each rack's network and another, external network that couples the racks to one another.

An issue with the traditional rack structure of Fig. 1 is that the computing resources themselves only have the granularity of an entire server computer. That is, should the resources of the rack be deficient in some way, the only way to address the shortcoming is to install another server computer into the rack. Server computer granularity can be particularly inefficient if the shortcoming is resolvable to a component of a server computer rather than an entire server computer. Here, as observed in Fig. 1, each server computer 103 not only includes CPU resources 104 (e.g., one or more general purpose processors) but also non volatile mass storage resources 105 (e.g., disk drives, solid state drives (SSDs) composed of flash memory, etc.). Therefore, should the rack's deficiency be a shortcoming in CPU processing power, one or more additional server computers are added to the rack 101 to increase the rack's CPU processing power. However, the additional servers also add storage resources and other power consuming elements which may not be needed or even desired.

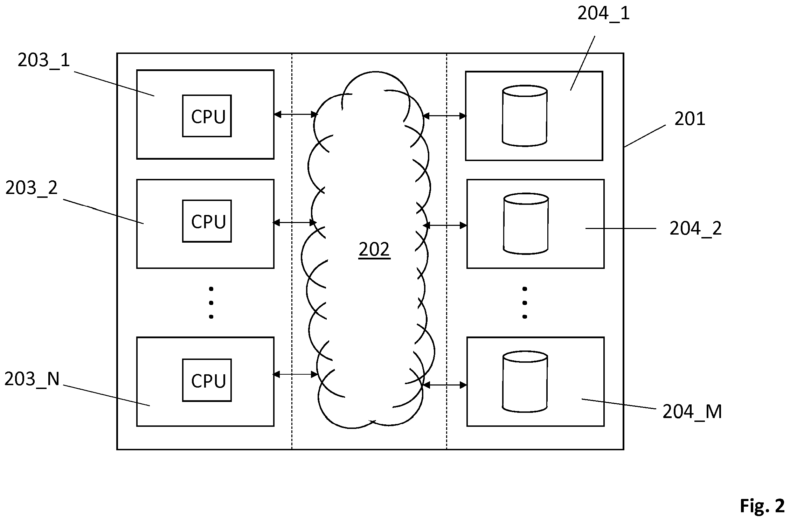

A new rack paradigm, shown in Fig. 2, seeks to open up the rack architecture so that different components of a complete computing system, such as the CPU resources 203, the non volatile mass storage components 204, the power supplies (not shown), etc. are individually pluggable into the backplane 202 of the rack 201 so that, e.g., customized rack solutions having different balances, e.g., of CPU processing power and non volatile mass data storage capacity can easily be configured. That is, rather than a rack 201 merely being a specific number of discrete computers, instead, in the new rack paradigm of Fig. 2, the rack itself corresponds to a customized computer ("a rack implemented modular computer").

Another trend in high performance computing is the emergence of new kinds of non volatile memory technologies (referred to generally as non volatile random access memory (NVRAM)) that operate significantly faster than traditional non volatile mass storage devices and/or support finer access granularities than traditional non volatile mass storage devices (which can only be accessed in "pages", "sectors" or "blocks" of data). With the emergence of NVRAM, traditional non volatile access/usage paradigms may be obviated/lessened in favor of new kinds of non volatile usage/access paradigms that treat non volatile resources more as a true random access memory than a traditional mass storage device.

Some possible examples include: 1) execution of byte addressable non volatile memory read and/or write instructions and/or commands; 2) physically accessing non volatile memory data at CPU cache line granularity; 3) operating software directly out of non volatile memory which behaves as true system memory or main memory (e.g., software main memory access read/write instructions executed by a CPU are completed directly at NVRAM rather than only at non volatile DRAM); 4) assignment of system/main memory address space to non volatile memory resources; 5) elimination and/or reduction of movement of "pages" of data between main memory and traditional mass storage device(s); 6) "commitment" of data as a mechanism of preserving the data (such as traditional database algorithms (e.g., two-phase commit protocol)) to NVRAM system memory rather than a traditional non volatile mass storage device; 7) accessing non volatile memory from a main memory controller rather than through a peripheral control hub; 8) existence of a multi-level system/main memory where the different levels have different access timing characteristics (e.g., a faster, "near memory" level composed of DRAM and slower "far memory" level composed of NVRAM); 9) existence of a "memory-side" cache at the front end of system/main memory (e.g., composed of DRAM) that caches the system/main memory's most requested items including items requested by components other than a CPU such as a display, peripheral, network interface, etc.

Possible technologies for NVRAM include phase change based memory, memory devices having storage cells composed of chalcogenide, a ferro-electric based memory (e.g., FRAM), a magnetic based memory (e.g., MRAM), a spin transfer torque based memory (e.g., STT-RAM), a resistor based memory (e.g., ReRAM), a Memristor based memory, universal memory, Ge2Sb2Te5 memory, programmable metallization cell memory, amorphous cell memory, Ovshinsky memory, "3D Xpoint" or "Optane" memory from Intel, Corp., etc. NVRAM technology may also manufacture a storage cell array as a three dimensional storage cell array, e.g., in the metallurgy above the semiconductor chip substrate, rather than as two dimensional array where the storage cells are embedded in the surface of the semiconductor chip substrate. Storage cells in the three dimensional storage cell array may also be accessed according to a cross-point physical access mechanism (e.g., a targeted cell resides between a pair of orthogonally oriented access wires in the chip's metallurgy).

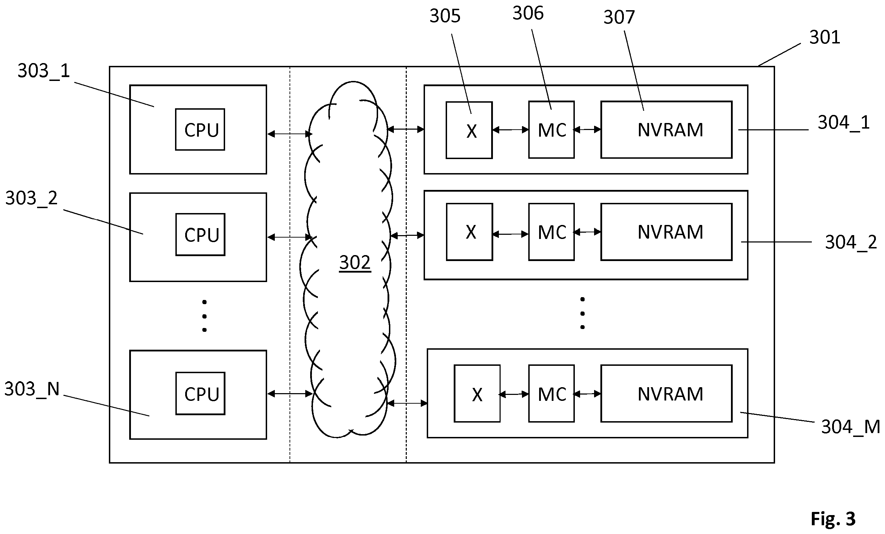

Fig. 3 shows a new kind of non volatile memory resource for use in the new rack paradigm described above with respect to Fig. 2. Here, as observed in Fig. 3, the rack 301 includes multiple non volatile memory modules 304 that are each individually plugged into the backplane of the rack (likewise, Fig. 3 also shows multiple CPU modules 303 that are also plugged into the backplane of the rack). The architecture of each non volatile memory module includes a switching layer 305, a memory controller layer 306, and an NVRAM layer 307. A network 302 is implemented over the rack's backplane to interconnect the CPU modules 303 and the non volatile memory modules 304.

In practice the network 302 can be a backplane having customized and/or standardized point-to-point or point-to-multipoint connections in any arrangement within the rack chassis and/or be an actual network (e.g., Ethernet, Infiniband, other switching fabric, etc.) having one or more nodal hops (e.g., switching hubs and/or routing components between end-points) within the rack chassis. In various embodiments, the connections through the network 302 are effected with emerging industry standard communication/interface technologies for connecting various computing system components (e.g., Cache Coherent Interconnect for Accelerators (CCIX), protocols/semantics defined by the Gen-Z consortium ("Gen-Z") and Coherent Accelerator Processor Interface (CAPI), Intel Accelerator Link ("Intel AL"), etc.). Such connection technologies may be designed to implement certain special "memory semantic" protocol services on top of an industry standard physical layer (e.g., PCIe, IEEE 802.3, etc.). Such special protocol services may include, e.g., fixed (or minimum level or guaranteed) bandwidth between end-points (e.g., CPU and memory), include CPU cache coherency support/protocols for multi-processor systems, reduce/eliminate device driver interruptions, support multiple instruction set architectures (ISAs) over a common link or are otherwise processor agnostic. The rack's backplane may present any of these emerging technologies as an interface into which modules (CPU modules, memory modules) that have also been designed according to the same emerging technology interface plug-into. As such, for example, modules of different vendors may plug into the backplane.

In various embodiments, the switching layer 305 is implemented as a circuit-switched network disposed on a semiconductor chip. Here, as is known in the art, a circuit-switched network (such as a traditional telephone network) is characterized by its ability to rapidly create and tear down different "connections" over time where each connection corresponds to a dedicated point-to-point path through the network from a particular input to a particular output. That is, if a particular input needs to be connected to a particular output, a dedicated connection between the particular input and the particular output is setup by the switching network in response. A communication then proceeds between the input and output over the connection. After the communication is completed, the connection is torn down so that, e.g., the input can form a new connection with another output and/or the output can form a new connection with another input.

The creation of a temporary but dedicated point-to-point path between a particular input and output pair results in the connection having extremely low propagation delay through the network. That is, e.g., the dedicated point-to-point path essentially corresponds to the reservation/dedication of network resources only to the specific connection. As such, there is little/no competition between the communication's traffic and the traffic of other communications that the network is concurrently handling.

Without such competition, the communication is free to pass through the network over the connection with practically negligible propagation delay. This stands in stark contrast to a traditional packet routed network in which packets are routed across multiple nodal hops, and, at each node, a packet may suffer queuing delay with other packets waiting for a link to a next node whose fixed bandwidth is not large enough to immediately transport all of the packets that are waiting to be sent to the next node. That is, in the case of a packet switched network, critical bandwidth resources are shared amongst communications which can result in propagation delay through the network. Here, the switching layer 305 may be part of a defined "memory semantic" protocol standard as described above or stand apart from such a standard.

Each memory module may be designed according to any of a number packaging structures such a dual in-line memory module (DIMM), "blade", "sled", PCIe card, etc.

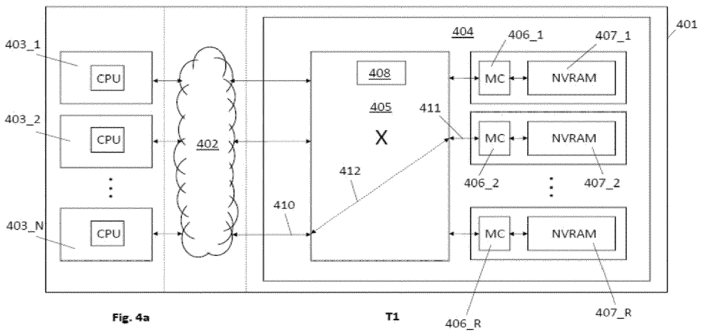

Figs. 4a through 4c illustrate the operation of one of the NVRAM resource modules 304 in more detail. Fig. 4a shows a single modular/pluggable NVRAM resource module 404 that is plugged into a rack 401. Multiple CPU modular/pluggable CPU resources 403 are also plugged into the rack 401. Here, notably, multiple memory controllers 406 and corresponding NVRAM devices 407 are disposed on the physical NVRAM resource module. Each memory controller 406 is coupled to its own set of one or more NVRAM devices 407. In various embodiments, each memory controller and associated set of NVRAM devices correspond to a different "slice" of system/main memory address space of the customized computer that the rack as a whole is configured to realize.

At time T1 CPU module 403_N has a need to read/write an item of data whose system memory address is within a slice of system memory address space that has been allocated to NVRAM region 407_2. For example, the CPU module 403_2 executes a memory access instruction specifying the system memory address of the needed data item. After internal look-ups into the CPU caches of the CPU module 403_2 do not reveal the item of data, a memory request containing the address of the data item is sent from the CPU module 403_2 over the rack's network 402 to the NVRAM module 404.

The request is received at the switch 405 of the NVRAM module 404 which includes control logic 408 that is able to covert the system memory address of the request to a particular switch output 411 that is coupled to the memory controller 406_2 that interfaces to the particular NVRAM region 407_2 whose allocated main memory address space encompasses the address of the request. The control logic 408 then sets up a connection 412 between the input port 410 of the switch that the request was received at and the output port 41 that is coupled to the correct NVRAM system memory address space.

After the connection 412 is setup, the request passes through the switch from the input port 410 to the output port 411 within minimal propagation delay. The memory controller 406_2 that is coupled to the output port 411 receives the request and processes it. In the case of a write request the request includes write data that is written over the targeted item in NVRAM 407_2. As alluded to above, the write request may be a byte addressable write command that only writes over a byte of information within NVRAM 407_2. When the write is complete the memory controller 406_2 sends a response back to the requesting CPU module through the switch 405. In the case of a read request the item of data is read from NVRAM 407_2 by the memory controller 406_2 and forwarded to the requesting CPU module through the switch 405. With the request having been fully serviced by the NVRAM memory module 404, the connection 412 is torn down by the control logic 408 so that, e.g., other connections between the ports may be newly setup.

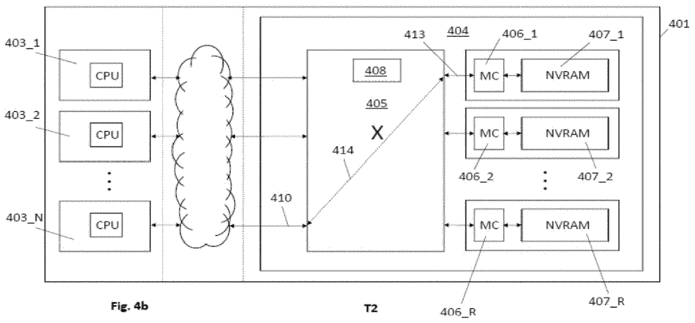

Referring to Fig. 4b, at time T2, a second request is received by the switch 405 at input port 410 from CPU memory module 403_N. The address of the second request, however, targets a different system memory address and corresponding memory controller 406_1 and NVRAM devices 407_1 of the NVRAM memory module 404. As such, the control logic sets up a second connection 414 between the input port 410 and output port 413. Memory controller 406_1 receives the request and process it (including accessing NVRAM region 407_1 similar to the request response activity described above with respect to Fig. 4a).

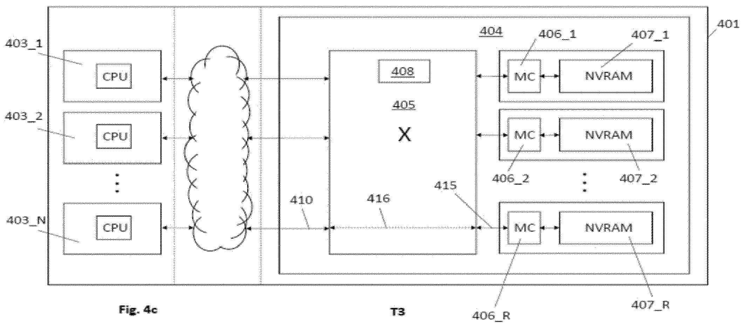

After the request has been fully serviced the second connection 414 is torn down which leaves input port 410 and output port 413 available for a next request. Fig. 4c shows a third request, at time T3, being received at input port 410 from CPU module 403_N which targets system memory address space allocated to NVRAM devices 407_3. As such, the control logic 408 sets up a third connection 416 which is subsequently torn down after the third request is fully responded to as described above.

Here, Figs. 4a through 4c depict how program code running on CPU module 403_N is able to access system memory resources. That is, as alluded to above, the requests may be issued by the CPU module 403_N in response to the CPU's execution of system memory access program code instructions. The sequence of Figs. 4a through 4c may correspond to three consecutive memory access program code instructions executed by the CPU 403_N that could not be serviced by CPU caching levels. Conceivably, the three requests may be issued in rapid succession by the CPU module 403_N to the NVRAM module 404. However, owing to both the control logic's ability to quickly setup and teardown connections and each of the connections having extremely low latency because they are dedicated connections within the switch 405, all three requests are fully responded to with minimal delay which, in turn, corresponds to higher performance of the CPU module 403_N and corresponding execution of the software that issued the memory access instructions.

As suggested by Figs. 4a through 4c, in an embodiment, the switch 405 has at least one input port for every CPU module that is plugged into the rack. As such, the switch 405 can concurrently process one request from each CPU module in the rack 401 per switch cycle. In various embodiments a single CPU module may have more than one output for sending memory access requests, and, the NVRAM module and its corresponding switch circuity has an input for every such CPU module output. In this case, the NVRAM module 404 can concurrently handle multiple requests per CPU module per switch cycle. Here, the different CPU module outputs may be dedicated to different system memory address ranges such that system memory requests issued by a same CPU module can be parallelized to different system memory address ranges.

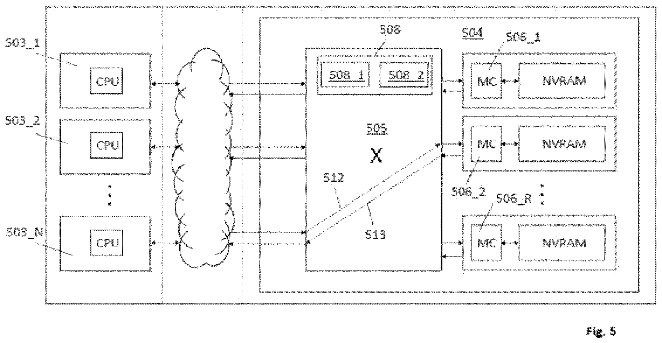

Fig. 5 shows another embodiment according to the present invention in which the switch is designed to have two planes of switch circuits: a first switch plane for incoming requests and a second switch plane for outgoing request responses. With separate incoming and outgoing switch planes, two independent connections 512, 513, one for incoming 512 and one for outgoing 513, are separately setup by the switching circuitry's control logic 508. That is, a first connection 512 is setup by the switch circuitry's incoming control logic 508_1 through the first switch plane to pass a request from a CPU module to a particular memory controller. The first connection 512 is torn down after the request is received by the targeted memory controller so that the memory controller can, e.g., receive an immediately following request from a different CPU module.

Alternatively, in an unclaimed embodiment, the connection 512 may remain in place, e.g., if the same CPU module has multiple requests to send to the particular memory controller (the same connection is held in place to transport multiple requests to the memory controller). Here, the incoming control logic 508_1 may exercise some kind of fairness and/or load balancing and/or priority algorithms to ensure that CPU modules are given access to a particular memory controller in a manner that is preferable for the rack's over-all system performance. For example, if no CPU module is deemed higher priority than any other CPU module, the incoming control logic 508_1 may ensure that each CPU module has equal access to a particular memory controller over time. The control incoming control logic may, however, be designed to respond to burst traffic patterns and give a particular CPU module extended access to a particular memory controller if it issues a large number of requests in succession to such a memory controller (in this situation, a same connection may be extended to handle multiple requests). If some CPU modules are given higher priority over other CPU modules, the incoming control logic 508_1 may setup connections more favorably for the higher priority CPU modules.

In the present invention, after a particular memory controller has serviced a particular request and is ready to respond to the requesting CPU module, the memory controller notifies the switch's second (outgoing) switch plane control logic 508_2 which sets up a second connection 513 through the second switch plane from the switch port that the memory controller is coupled to, to the switch port that requesting CPU module is coupled to. The response is then sent by the memory controller to the requesting CPU module over the second connection 513. After the response is sent through the switch 505 over the second connection 513 to the requesting CPU module, the second connection 513 is torn down so that, e.g., the memory controller can send an immediately following response to another CPU module.

Alternatively, in an unclaimed embodiment, as with the incoming control logic 508_1, the outgoing control logic 508_2 may keep the outgoing connection 513 in place so that multiple responses can be sent from the memory controller over the connection to the same CPU module. Likewise, certain fair or unfair weighting schemes may be implemented by the outgoing control logic 508_2 to effect connections between particular memory controllers and particular CPU modules that effect the desired performance of the computer that is implemented by the rack 501.

Note that the ability to setup incoming and outgoing connections 512, 513 as separate connections for any complete request/response cycle (i.e., a first incoming connection 512 is setup to pass a request from the CPU module side to the memory controller side and then sometime later a second outgoing connection 513 is setup to pass a request from the memory controller side to the CPU module side) permits incoming requests and outgoing responses to be queued at their respective memory controllers. That is, from the perspective of any particular memory controller, the flow of incoming requests can be queued in a first incoming queue that resides within the memory controller and the flow of outgoing requests can be queued in a second outgoing queue that resides with the memory controller.

So doing reduces blocking at any particular memory controller so that multiple incoming connections through the switch 505 to the memory controller are free to be setup without restraint until the depth/capacity of the memory controller's incoming queue is reached. Likewise, if for some reason a CPU module cannot receive a response, a memory controller's activity need not cease (it can still, e.g., respond to incoming requests and queue responses into its outbound queue). Separate incoming and outgoing connections 512, 513 through a pair of switch planes and corresponding incoming/outgoing queuing at the memory controller also decouples, to some extent, request/response traffic flows from the NVRAM accessing activity (a slow NVRAM access need not slow the flow of the memory controller's incoming requests or outgoing responses).

With respect to blocking, note that blocking may occur at a particular switch output to a particular memory controller. For example, two requests from two different CPU modules may be received at two different switch input ports. The incoming control logic 508_1 cannot setup two simultaneous connections from different switch input ports to a same switch output port. As such, one of the incoming requests will be blocked at the switch input. Here, each switch input port may have associated queuing in order to handle processing delay owing to such blocking. Similarly, the blocking may occur in the outgoing direction. For example, two responses from two different memory controllers may simultaneously desire to be sent to the same CPU module. Again, the outgoing control logic cannot setup two simultaneous connections to a same switch destination. As such, one of the memory controllers will have to wait for its outgoing connection to be setup by the switch. Here, the memory controller's aforementioned outbound queue should be sufficient to handle the imposed delay.

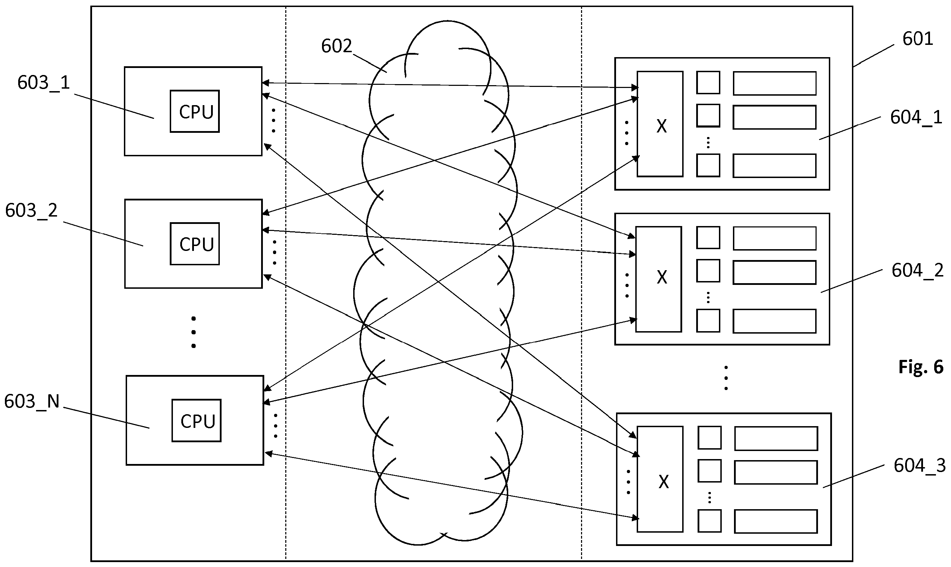

Fig. 6 shows a complete rack having multiple NVRAM memory modules. Here, the rack's network 602 is configured to connect each CPU module 603 to a dedicated switch input on each NVRAM module 604. The different NVRAM modules 604 are, e.g., allocated different system memory address space. As such, system memory requests from a same CPU module to different system memory address regions are correspondingly directed to different NVRAM modules 604. If the rack's network 602 is hardwired (e.g., as suggested by Fig. 6), each CPU module 603 should include routing table logic to direct a memory access request having a particular system memory address over the correct link to the correct NVRAM module.

By contrast, if the rack's network 602 is implemented as a switched network (e.g., an Ethernet network), the network 602 will have the routing logic to direct a memory access request having a particular system memory address to the correct NVRAM module. Operation of each NVRAM module individually is as described at length above where, e.g., each system memory address space allocation given to any particular NVRAM module is further broken down to individual memory controllers and corresponding NVRAM devices on the NVRAM module.

Although embodiments above have been directed to CPU accesses of NVRAM, e.g. as system memory resources having allocable system memory address space, it is possible that the memory modules 304 themselves include DRAM memory partially or wholly, e.g., at the expense of NVRAM memory resources. That is, various embodiments of the memory modules 304 may include DRAM memory that is allocated system memory address space and to which the CPU accesses are targeted.

Here, the CPU modules each include at least one processor having, e.g., one or more processing cores where each processing core includes at least one instruction execution pipeline to execute program code instructions. Any of the logic described above (e.g. switch control logic, routing logic, etc.) may be implemented with dedicated, hardwired (e.g., application specific integrated circuit (ASIC)) logic circuitry, programmable logic circuitry (e.g., field programmable gate array (FPGA) logic circuitry, programmable logic array (PLA) logic circuitry), logic circuitry designed to execute some form of program code (e.g., an embedded controller or embedded processor) or any combination thereof.

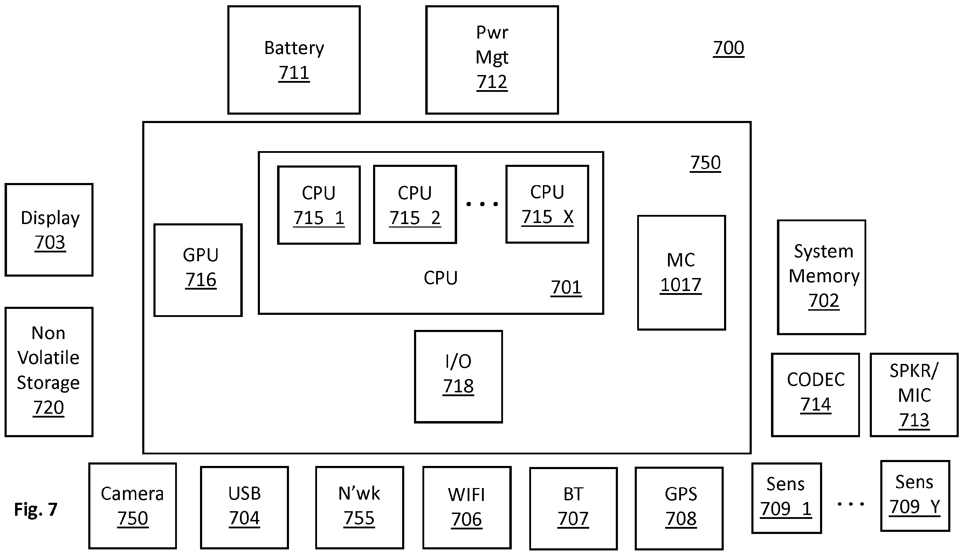

Although the embodiments described above were directed, e.g., to a computing system implemented with a rack, it is pertinent to point out that the teachings above may be applied more generally to any computing system. FIG. 7 provides an exemplary depiction of a computing system 700 (e.g., a smartphone, a tablet computer, a laptop computer, a desktop computer, a server computer, etc.). As observed in FIG. 7, the basic computing system 700 may include a central processing unit 701 (which may include, e.g., a plurality of general purpose processing cores 715_1 through 715_X) and a main memory controller 717 disposed on a multi-core processor or applications processor, system memory 702, a display 703 (e.g., touchscreen, flat-panel), a local wired point-to-point link (e.g., USB) interface 704, various network I/O functions 705 (such as an Ethernet interface and/or cellular modem subsystem), a wireless local area network (e.g., WiFi) interface 706, a wireless point-to-point link (e.g., Bluetooth) interface 707 and a Global Positioning System interface 708, various sensors 709_1 through 709_Y, one or more cameras 710, a battery 711, a power management control unit 712, a speaker and microphone 713 and an audio coder/decoder 714.

An applications processor or multi-core processor 750 may include one or more general purpose processing cores 715 within its CPU 701, one or more graphical processing units 716, a memory management function 717 (e.g., a memory controller) and an I/O control function 718. The general purpose processing cores 715 typically execute the operating system and application software of the computing system. The graphics processing unit 716 typically executes graphics intensive functions to, e.g., generate graphics information that is presented on the display 703. The memory control function 717 interfaces with the system memory 702 to write/read data to/from system memory 702. Here, the memory control function may be implemented with a switching layer that stands between a memory controller and one or more CPUs (including being coupled to a second network that the one or more CPUs are coupled to).

The power management control unit 712 generally controls the power consumption of the system 700. Each of the touchscreen display 703, the communication interfaces 704-507, the GPS interface 708, the sensors 709, the camera(s) 710, and the speaker/microphone codec 713, 714 all can be viewed as various forms of I/O (input and/or output) relative to the overall computing system including, where appropriate, an integrated peripheral device as well (e.g., the one or more cameras 710). Depending on implementation, various ones of these I/O components may be integrated on the applications processor/multi-core processor 750 or may be located off the die or outside the package of the applications processor/multi-core processor 750. The computing system also includes non-volatile storage 720 which may be the mass storage component of the system.

Embodiments of the invention may include various processes as set forth above. The processes may be embodied in machine-executable instructions. The instructions can be used to cause a general-purpose or special-purpose processor to perform certain processes. Alternatively, these processes may be performed by specific/custom hardware components that contain hardwired logic circuitry or programmable logic circuitry (e.g., field programmable gate array (FPGA), programmable logic device (PLD)) for performing the processes, or by any combination of programmed computer components and custom hardware components.

Elements of the present invention may also be provided as a machine-readable medium for storing the machine-executable instructions. The machine-readable medium may include, but is not limited to, floppy diskettes, optical disks, CD-ROMs, and magneto-optical disks, FLASH memory, ROMs, RAMs, EPROMs, EEPROMs, magnetic or optical cards, propagation media or other type of media/machine-readable medium suitable for storing electronic instructions. For example, the present invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

In the foregoing specification, the invention has been described with reference to specific exemplary embodiments thereof. It will, however, be evident that various modifications and changes may be made thereto without departing from the scope of the invention as set forth in the appended claims. The specification and drawings are, accordingly, to be regarded in an illustrative rather than a restrictive sense.

## Claims

1. An apparatus, comprising:
a non volatile memory module (404) for insertion into a rack implemented modular computer, the non volatile memory module comprising:
a plurality of memory controllers (406);
respective non-volatile random access memory coupled to each of the memory controllers;
a switch circuit operable to circuit switch incoming requests and outgoing responses between the rack's backplane 302 and the plurality of memory controllers, the incoming requests sent by one or more CPU modules (303, 403_N) of the rack implemented modular computer, the outgoing responses sent to the one or more CPU modules, wherein the switch circuit further comprises
a first switch plane operable to circuit switch the incoming requests,
a second switch plane operable to circuit switch the outgoing responses,
a first switch control logic (508_1) operable to set up a first connection (512) through the first switch plane to pass a request from one of the one or more CPU modules to one of the plurality of memory controllers, wherein the first switch control logic is operable to tear down the first connection after the request has been received by the one of the plurality of memory controllers, and
a second switch control logic (508_2) operable to set up a second connection (513), in response to a notice from the one of the plurality of memory controllers, for the one of the plurality of memory controllers to send a response to the one of the one or more CPU modules, the notice indicating that the one of the plurality of memory controllers has serviced the request and is ready to respond to the one of the one or more CPU modules, wherein the second switch control logic (508_2) is operable to set up a second connection (513) through the second switch plane between one of the one or more CPU modules and the one of the plurality of memory controllers, and wherein the first connection is separate from the second connection.

2. The apparatus of claim 1 wherein the respective non volatile random access memory is to be assigned system memory address space of the rack implemented modular computer.

3. The apparatus of claim 1 wherein the switch circuit further includes incoming request control logic to setup and teardown connections within the switch that transport the incoming requests and outgoing response control logic to setup and teardown connections within the switch that transport the outgoing responses.

4. The apparatus of 1 wherein the incoming requests are memory access instructions of program code executed by the one or more CPU modules of the rack implemented modular computer.

5. The apparatus of claim 1 wherein a non modular memory module comprises queuing circuitry between the rack's backplane and inputs to the switch circuit that receive the incoming requests.

6. The apparatus of claim 1 wherein the memory controllers further comprise respective incoming request and outgoing response queues.

7. The apparatus of claim 1 wherein the non-volatile random access memory is composed of three-dimensionally stacked storage cells.

8. A computing system comprising the apparatus of any of claims 1-7.

9. A modular computer, comprising:
a rack;
one or more CPU modules that are plugged into the rack, the CPU modules operable to execute program code of the modular computer;
the apparatus of any of claims 1- 7.

## Patentansprüche

1. Vorrichtung, umfassend:
ein nichtflüchtiges Speichermodul (404) zum Einfügen in einen Rack-implementierten modularen Computer, wobei das nichtflüchtige Speichermodul umfasst:
eine Mehrzahl von Speichersteuerungen (406);
jeweilige nichtflüchtige Direktzugriffsspeicher, die mit jedem der Speichersteuerungen gekoppelt sind;
eine Vermittlungsleitung, die betreibbar ist, um eingehende Anforderungen und ausgehende Antworten zwischen der Backplane 302 des Racks und der Mehrzahl von Speichersteuerungen zu vermitteln, wobei die eingehenden Anforderungen durch ein oder mehrere CPU-Module (303, 403_N) des Rack-implementierten modularen Computers gesendet werden und die ausgehenden Antworten an das eine oder mehrere CPU-Module gesendet werden, wobei die Vermittlungsleitung ferner umfasst
eine erste Vermittlungsebene, die betreibbar ist, um die eingehenden Anforderungen zu vermitteln,
eine zweite Vermittlungsebene, die betreibbar ist, um die ausgehenden Antworten zu vermitteln,
eine erste Vermittlungssteuerlogik (508_1), die betreibbar ist, um eine erste Verbindung (512) über die erste Vermittlungsebene aufzubauen, um eine Anforderung von einem der einen oder mehreren CPU-Module an eines der Mehrzahl von Speichersteuerungen weiterzuleiten, wobei die erste Vermittlungssteuerlogik betreibbar ist, um die erste Verbindung abzubauen, nachdem die Anforderung von dem einen der Mehrzahl von Speichersteuerungen empfangen worden ist, und
eine zweite Vermittlungssteuerlogik (508_2), die betreibbar ist, um als Reaktion auf eine Mitteilung von der einen der Mehrzahl von Speichersteuerungen eine zweite Verbindung (513) für die eine der Mehrzahl von Speichersteuerungen aufzubauen, um eine Antwort an das eine der einen oder mehreren CPU-Module zu senden, wobei die Mitteilung angibt, dass die eine der Mehrzahl von Speichersteuerungen die Anforderung bedient hat und bereit ist, an das eine der einen oder mehreren CPU-Module zu antworten, wobei die zweite Schaltsteuerlogik (508_2) betreibbar ist, um eine zweite Verbindung (513) durch die zweite Vermittlungsebene zwischen einem der einen oder mehreren CPU-Module und dem einen der Mehrzahl von Speichersteuerungen aufzubauen, und wobei die erste Verbindung von der zweiten Verbindung getrennt ist.

2. Vorrichtung nach Anspruch 1, wobei der jeweilige nichtflüchtige Direktzugriffsspeicher dem Systemspeicheradressraum des Rack-implementierten modularen Computers zuzuweisen ist.

3. Vorrichtung nach Anspruch 1, wobei die Vermittlungsleitung ferner eine Steuerlogik für eingehende Anforderungen zum Auf- und Abbau von Verbindungen innerhalb der Vermittlungsleitung, die die eingehenden Anforderungen transportieren, und eine Steuerlogik für ausgehende Antworten zum Auf- und Abbau von Verbindungen innerhalb der Vermittlung, die die ausgehenden Antworten transportieren, beinhaltet.

4. Vorrichtung nach 1, wobei die eingehenden Anforderungen Speicherzugriffsanweisungen von Programmcode sind, der von einem oder mehreren CPU-Modulen des modularen Rack-implementierten Computers ausgeführt wird.

5. Vorrichtung nach Anspruch 1, wobei ein nicht modulares Speichermodul eine Warteschlangenschaltung zwischen der Backplane des Racks und den Eingängen der Vermittlungsleitung umfasst, die die eingehenden Anforderungen empfangen.

6. Vorrichtung nach Anspruch 1, wobei die Speichersteuerungen ferner jeweilige Warteschlangen für eingehende Anforderungen und ausgehende Antworten umfassen.

7. Vorrichtung nach Anspruch 1, wobei der nichtflüchtige Direktzugriffsspeicher aus dreidimensional gestapelten Speicherzellen besteht.

8. Rechensystem, das die Vorrichtung nach einem der Ansprüche 1 bis 7 umfasst.

9. Modularer Computer, umfassend:
ein Rack;
ein oder mehrere CPU-Module, die in das Rack eingesteckt werden, wobei die CPU-Module betreibbar sind, um Programmcode des modularen Computers auszuführen;
die Vorrichtung nach einem der Ansprüche 1-7.

## Revendications

1. Appareil comprenant :
un module de mémoire non volatile (404) destiné à être inséré dans un ordinateur modulaire à châssis, le module de mémoire non volatile comprenant :
une pluralité de contrôleurs de mémoire (406) ;
une mémoire vive non volatile respective couplée à chacun des contrôleurs de mémoire ;
un circuit de commutation actionnable pour une commutation de circuits des demandes entrantes et des réponses sortantes entre le fond de panier 302 du châssis et la pluralité de contrôleurs de mémoire, les demandes entrantes étant envoyées par un ou plusieurs modules de CPU (303, 403 N) de l'ordinateur modulaire à châssis, les réponses sortantes étant envoyées à un ou plusieurs modules de CPU, dans lequel le circuit de commutation comprend en outre
un premier plan de commutation actionnable pour une commutation de circuits des demandes entrantes,
un second plan de commutation actionnable pour une commutation de circuits des réponses sortantes,
une première logique de commande de commutation (508_1) exploitable pour établir une première connexion (512) par le biais du plan de commutation afin de passer une demande provenant d'un des un ou plusieurs modules de CPU à un de la pluralité de contrôleurs de mémoire, dans lequel la première logique de commande de commutation est exploitable pour démanteler la première connexion après réception de la demande par l'un de la pluralité de contrôleurs de mémoire, et
une deuxième logique de commande de commutation (508_2) exploitable pour établir une seconde connexion (513), en réponse à un avis provenant de l'un de la pluralité de contrôleurs de mémoire, pour que l'un de la pluralité de contrôleurs de mémoire envoie une réponse à l'un des un ou plusieurs modules de CPU, l'avis indiquant que l'un de la pluralité de contrôleurs de mémoire a traité la demande et est prêt à répondre à l'un des un ou plusieurs modules de CPU, dans lequel la deuxième logique de commande de commutation (508_2) est exploitable pour établir une seconde connexion (513) par le biais du deuxième plan de commutation entre un des un ou plusieurs modules de CPU et l'un de la pluralité de contrôleurs de mémoire, et dans lequel la première connexion est distincte de la seconde connexion.

2. Appareil selon la revendication 1 dans lequel la mémoire vive non volatile respective se voit attribuer un espace d'adressage mémoire système de l'ordinateur modulaire à châssis.

3. Appareil selon la revendication 1 dans lequel le circuit de commutation comporte en outre une logique de commande de demandes entrantes pour établir et démanteler des connexions au sein du commutateur qui transportent les demandes entrantes et une logique de commande de réponses sortantes pour établir et démanteler des connexions au sein du commutateur qui transportent les réponses sortantes.

4. Appareil selon la revendication 1 dans lequel les demandes entrantes sont des instructions d'accès à la mémoire du code de programme exécuté par les un ou plusieurs modules de CPU de l'ordinateur modulaire à châssis.

5. Appareil selon la revendication 1 dans lequel un module de mémoire non modulaire comprend des circuits de mise en file d'attente entre le fond de panier du châssis et des entrées du circuit de commutation qui reçoivent les demandes entrantes.

6. Appareil selon la revendication 1 dans lequel les contrôleurs de mémoire comprennent en outre des files d'attente de demandes entrantes et de réponses sortantes respectives.

7. Appareil selon la revendication 1 dans lequel la mémoire vive non volatile est composée de cellules de stockage empilées en trois dimensions.

8. Système informatique comprenant l'appareil selon l'une quelconque des revendications 1 à 7.

9. Ordinateur modulaire comprenant :
un châssis ;
un ou plusieurs modules de CPU enfichés dans le châssis, les modules de CPU étant exploitables pour exécuter un code de programme de l'ordinateur modulaire ;
l'appareil selon l'une quelconque des revendications 1 à 7.
